# EUROPÄISCHE PATENTSCHRIFT

(11) **EP 2 490 847 B1**
(45) Veröffentlichungstag und Bekanntmachung des Hinweises auf die Patenterteilung: **15.03.2017**
(21) Anmeldenummer: 10771029.5
(22) Anmeldetag: 21.10.2010
(51) Int. Cl.: B23B 51/02

(54) **BOHRWERKZEUG**
DRILLING TOOL
OUTIL DE FORAGE

(30) Priorität: 21.10.2009 DE 102009050196
(43) Veröffentlichungstag der Anmeldung: 29.08.2012
(73) Patentinhaber: Gühring OHG, 72458 Albstadt (DE)
(72) Erfinder: LISCHEVSKI, Gerhard, 72336 Balingen (DE)
(74) Vertreter: Meitinger, Thomas Heinz
(86) Internationale Anmeldenummer: PCT/EP2010/006450
(87) Internationale Veröffentlichungsnummer: WO 2011/047865

(56) Entgegenhaltungen:
- DE-A1- 2 228 122
- DE-A1- 3 726 251
- US-A- 4 759 667
- US-A- 5 584 617

## Beschreibung

### GEBIET DER ERFINDUNG

Die vorliegende Erfindung betrifft ein Bohrwerkzeug zur spanenden Bearbeitung.

### HINTERGRUND DER ERFINDUNG

Im Stand der Technik sind Bohrwerkzeuge bekannt, die Hauptschneiden und eine Querschneide aufweisen. Die Querschneide schneidet dabei das Material nicht, sondern quetscht und verdrängt es vielmehr hin zu den Hauptschneiden. Dies führt zu einer mechanischen Belastung des gesamten Bohrwerkzeugs, einer erhöhten zeitlichen Dauer des Bohrvorgangs und eventuell einem "Verlaufen" des Bohrwerkzeugs. Um diese Nachteile zu vermeiden, wird eine Ausspitzung des Bohrwerkzeugs vorgenommen, die allerdings zusätzliche Bearbeitungsprozesse bei der Herstellung des Bohrwerkzeugs notwendig macht. Das Dokument DE3726251 A1 zeigt einen Spiralbohrer, insbesondere einen Vollhartmetallspiralbohrer. Die US 4759667 beschreibt ein Bohrwerkzeug zum Bohren von Leiterplatten.

### ZUSAMMENFASSUNG DER ERFINDUNG

Die zusätzlichen Arbeitsprozesse aufgrund des Ausspitzens verlangsamen und verteuern den Herstellungsprozess eines Bohrwerkzeugs.

Es kann daher als eine Aufgabe der vorliegenden Erfindung betrachtet werden, ein Bohrwerkzeug bereitzustellen, das effizient hergestellt werden kann, wobei der Effekt einer Ausspitzung erzielt werden kann, ohne dass dies zu einer deutlich längeren Dauer des Herstellvorgangs führt.

Diese Aufgabe wird durch ein Bohrwerkzeug mit den Merkmalen des Patentanspruchs 1 gelöst. Weitere vorteilhafte Ausgestaltungen der Erfindung ergeben sich aus den Unteransprüchen.

Als erste Ausführungsform der Erfindung wird ein Bohrwerkzeug zur spanenden Bearbeitung zur Verfügung gestellt, wobei das Bohrwerkzeug umfasst: mindestens vier Hauptschneiden und mindestens vier erste Freiflächen mit einem ersten Freiwinkel, wobei die ersten Freiflächen angrenzend an die Hauptschneiden ausgebildet sind, wobei die ersten Freiflächen ausgehend vom Umfang des Bohrwerkzeugs zum Kern des Bohrwerkzeugs verjüngend ausgebildet sind, wobei die ersten Freiflächen keilförmig ausgebildet sind, wobei das Bohrwerkzeug umfasst: zweite Freiflächen mit einem zweiten Freiwinkel, wobei die zweiten Freiflächen angrenzend an die ersten Freiflächen ausgebildet sind, wobei sich durch die Ausbildung des Bohrwerkzeugs eine Ausspitzung ergibt, und wobei das Bohrwerkzeug jeweils dritte Freiflächen umfasst.

Eine derartige Bohrergeometrie führt zu einer Ausdehnung der zweiten Freifläche auf Kosten der Ausdehnung der ersten Freifläche. Die zweite Freifläche weist einen größeren Freiwinkel als die erste Freifläche auf, daher kann insgesamt eine bessere Spanabfuhr ermöglicht werden, wodurch die notwendige Vorschubkraft (Axialkraft) reduziert werden kann. Hierdurch wird die mechanische Belastung des Bohrwerkzeugs im Einsatz verringert und es kann eine höhere Vorschubgeschwindigkeit realisiert werden. Ferner kann durch die räumliche Ausweitung der zweiten Freifläche eine Ausspitzung erfolgen, wodurch zusätzliche Schleifvorgänge für eine Ausspitzung überflüssig werden. Dies führt zu einer Verkürzung der Herstelldauer des Bohrwerkzeugs.

Beispielhafte Ausführungsformen werden in den abhängigen Ansprüchen beschrieben.

Gemäß einer beispielhaften Ausführungsform der Erfindung wird ein Bohrwerkzeug zur Verfügung gestellt, wobei der zweite Freiwinkel größer als der erste Freiwinkel ist.

Im Stand der Technik sind erste Freiflächen bekannt, die parallele Begrenzungslinien aufweisen und etwa in der Form eines Rechtecks oder einer Raute ausgebildet sind. Erfindungsgemäß werden die ersten Freiflächen beispielsweise kreissektorförmig oder keilförmig ausgebildet und erstrecken sich dadurch über eine geringere Fläche als die im Stand der Technik bekannten ersten Freiflächen.

In einer weiteren erfindungsgemäßen Ausführungsform wird ein Bohrwerkzeug zur Verfügung gestellt, wobei das Bohrwerkzeug umfasst: eine Querschneide, wobei die zweite Freifläche an die Querschneide angrenzend ausgebildet ist und wobei die erste Freifläche nicht an die Querschneide angrenzend ausgebildet ist.

Eine zweite Freifläche schließt sich direkt an die erste Freifläche an und weist typischerweise einen größeren Freiwinkel auf, wodurch eine bessere Spanabfuhr erreicht werden kann.

Eine dritte Freifläche kann angeordnet werden, um die Freistellung zu garantieren, d.h. um weiteren Freiraum zu schaffen, damit die Spanabfuhr verbessert wird, was die notwendige Vorschubkraft/Axialkraft weiter reduzieren kann.

Statt der ersten Freifläche ist erfindungsgemäß ausschließlich die zweite Freifläche zur Querschneide benachbart. Dies führt dazu, dass der Kern bereits auf einen Restkern geschliffen ist, wodurch der Effekt einer Ausspitzung bereits erzielt wurde. Eine zusätzliche weitere Ausspitzung ist daher nicht mehr nötig, wodurch die Dauer des Herstellvorgangs des Bohrwerkzeugs verkürzt werden kann.

Gemäß einem weiteren Ausführungsbeispiel der vorliegenden Erfindung wird ein Bohrwerkzeug zur Verfügung gestellt, wobei das Bohrwerkzeug umfasst: eine weitere Hauptschneide und eine weitere erste Freifläche, wobei die weitere erste Freifläche angrenzend an die weitere Hauptschneide ausgebildet ist, wobei die weitere erste Freifläche ausgehend vom Umfang des Bohrwerkzeugs zum Kern des Bohrwerkzeugs verjüngend ausgebildet ist.

Gemäß einer beispielhaften Ausführungsform der Erfindung wird ein Bohrwerkzeug zur Verfügung gestellt, wobei das Bohrwerkzeug umfasst: eine Querschneide, wobei die zweiten Freiflächen an die Querschneide angrenzend ausgebildet sind und wobei die ersten Freiflächen nicht an die Querschneide angrenzend ausgebildet sind.

Erfindungsgemäß weist das Bohrwerkzeug vier oder mehr an Hauptschneiden und vier oder mehr an ersten und zweiten Freiflächen auf, wobei die ersten Freiflächen einen jeweiligen ersten Freiwinkel aufweisen und die zweiten Freiflächen einen jeweiligen zweiten Freiwinkel aufweisen. Der zweite Freiwinkel einer zweiten Freifläche ist größer als der korrespondierende erste Freiwinkel einer benachbarten ersten Freifläche.

Als eine Idee der Erfindung kann angesehen werden, ein Bohrwerkzeug zur Verfügung zu stellen, das durch seine Bohrergeometrie eine Ausspitzung zur Folge hat, ohne dass hierzu zusätzliche Arbeitsprozesse notwendig sind. Eine Ausspitzung, also das Verkürzen der Querschneide, führt zu einer besseren Spanabfuhr, was eine Verringerung der notwendigen Vorschubkraft zur Folge hat. Ferner wird die Gefahr des "Verlaufens" verringert und das Quetschen bzw. Verdrängen des Materials hin zu den Hauptschneiden durch die Querschneide fällt ebenfalls geringer aus, wodurch zusätzlich die Vorschubkraft/Axialkraft reduziert werden kann.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten einer beispielhaften Bohrspitze werden anhand der in den Zeichnungen dargestellten Ausführungsbeispiele deutlich. Es zeigen
Fig. 1 eine Bohrerspitze in der Vorderansicht,
Fig. 2 eine weitere Bohrerspitze in der Vorderansicht,
Fig. 3 die weitere Bohrerspitze in der Vorderansicht,
Fig. 4 eine Darstellung eines Schleifvorgangs.

### DETAILLIERTE BESCHREIBUNG BEISPIELHAFTER AUSFÜHRUNGSFORMEN

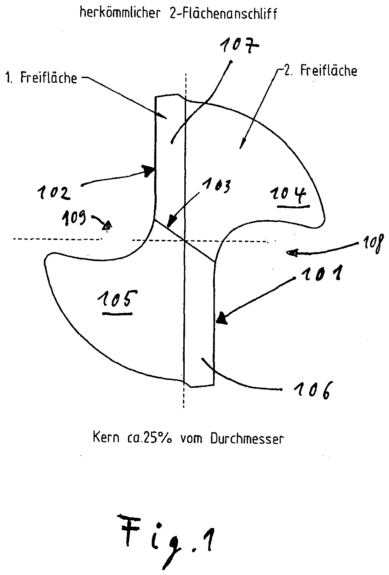

Fig. 1 zeigt ein Bohrwerkzeug, das nicht unter den Schutzumfang der Ansprüche fällt, mit einer Bohrerspitze, die Hauptschneiden 101, 102 und eine Querschneide 103 aufweist. Ausgehend von der Hauptschneide 101, 102 erstreckt sich eine erste Freifläche 106, 107, die der Abfuhr von Spänen und/oder Kühl- und/oder Schmiermittel dient. Hierzu ist die erste Freifläche 106, 107 leicht abfallend mit einem ersten Freiwinkel, um hinter der Hauptschneide 101, 102 Freiraum für Späne und/oder Kühl- und/oder Schmiermittel zu schaffen. Ferner weist das Bohrwerkzeug Spannuten 108, 109 auf, um die Späne und/oder das Kühl- und/oder Schmiermittel abführen zu können. In dieser Ausführungsform ist die erste Freifläche mit zwei parallelen Begrenzungslinien ausgeführt, wobei die eine Begrenzungslinie die Hauptschneide 101, 102 darstellt und die zweite Begrenzungslinie der Übergang zwischen erster Freifläche 106, 107 und zweiter Freifläche 104, 105 darstellt. Die Bohrerspitze weist ferner eine zweite Freifläche 104, 105 auf, die mit einem zweiten Freiwinkel abfallend ausgebildet ist, wobei der zweite Freiwinkel größer als der erste Freiwinkel ist. Hierdurch ergibt sich im Bereich der zweiten Freifläche ein noch größerer Freiraum zur Abfuhr von Spänen und/oder Kühl- und/oder Schmiermittel. Der erste Freiwinkel ist kleiner als der zweite Freiwinkel, damit direkt hinter der Hauptschneide mehr "Material steht", weswegen das Bohrwerkzeug stabiler ausgeführt ist. Eine zweite Freifläche, die größeren Freiraum bietet, wird daher weiter entfernt von der Hauptschneide angeordnet, um die Stabilität des Bohrwerkzeugs nicht zu beeinträchtigen.

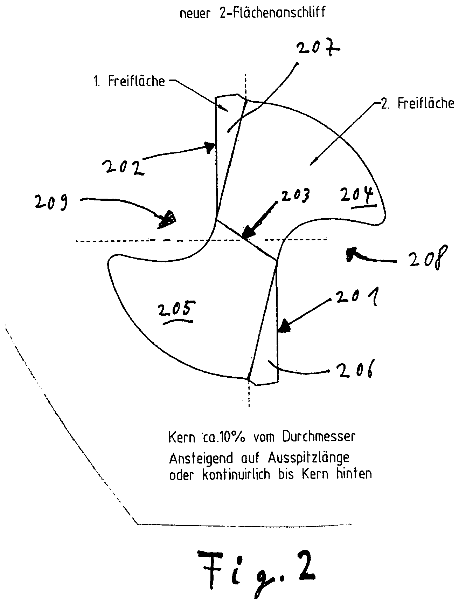

Fig. 2 zeigt ein weiteres Bohrwerkzeug, das nicht unter den Schutzumfang der Ansprüche fällt, mit einer Bohrerspitze mit Hauptschneiden 201, 202 und einer Querschneide 203. Ferner weist das Bohrwerkzeug erste Freiflächen 206, 207 und zweite Freiflächen 204, 205 auf. Die erste Freifläche 206, 207 ist dabei jeweils keilförmig bzw. kreissektorförmig ausgebildet. Die im Vergleich zur Ausführungsform gemäß der Fig. 1 von der ersten Freifläche 206, 207 nicht eingenommenen Fläche wird von der jeweiligen zweiten Freifläche 204, 205 eingenommen. Insbesondere wird nahezu der gesamte Bereich um die Querschneide 203 von der zweiten Freifläche 204, 205 eingenommen. Die zweite Freifläche 204, 205 zeichnet sich durch einen größeren Freiwinkel aus. Hierdurch ergibt sich eine Verringerung des Kerns auf einen Restkern, wodurch die Vorschubkraft auch ohne Ausspitzung verringert werden kann. Es wird daher durch die Bohrergeometrie der Kern des Bohrwerkzeugs schon auf einen reduzierten Restkern geschliffen, ohne dass zusätzliche Arbeitsprozesse für eine Ausspitzung notwendig wären. Ferner ergibt sich durch die Vergrößerung der zweiten Freiflächen 204, 205 eine verbesserte Abfuhr von Spänen und/oder Kühl- und/oder Schmiermittel, wodurch die notwendige Vorschubkraft zusätzlich verringert wird. Fig. 2 stellt noch die Spannuten 208, 209 dar, wobei auch nur eine Spannut oder drei, vier, fünf oder eine Mehrzahl von Spannuten angeordnet sein können.

Eine Hauptschneide mit einer anschließenden Freifläche, deren Freiwinkel relativ groß ist, weist den Vorteil auf, dass hohe Schnittgeschwindigkeiten ermöglicht werden. Ein derartiges "scharfes" Bohrwerkzeug weist allerdings den Nachteil auf, dass es im Vergleich zu einem "stumpfen" Bohrwerkzeug mechanisch instabil sein kann und daher eher zu z.B. Ausbrüchen neigen kann. Insbesondere in der Nähe des Umfangs kann ein Übergang von einer Hauptschneide zu einer anschließenden Freifläche mit großem Freiwinkel ("scharfer" Übergang) zu einer Bruchneigung führen. Erfindungsgemäß wird daher ein Bohrwerkzeug zur Verfügung gestellt, bei dem eine erste Freifläche 306, 307 in der Nähe des Umfangs an die Hauptschneide 301, 302 anschließt, wobei die erste Freifläche 306, 307 einen ersten Freiwinkel aufweist. Im Zentrum des Bohrwerkzeugs kann eine zweite Freifläche 304, 305 an die Hauptschneide 301, 302 anschließen, wobei die zweite Freifläche 304, 305 einen zweiten Freiwinkel aufweist, der größer als der erste Freiwinkel ist. In einer vorteilhaften Ausführungsform wird die erste Freifläche 306, 307 kreissektorförmig bzw. keilförmig ausgebildet, wobei der Kreisbogen des durch die erste Freifläche 306, 307 aufgespannten Kreissektors als Teil des Umfangs des Bohrwerkzeugs ausgebildet sein kann. Hierdurch erhält man ein Bohrwerkzeug mit einer "stumpfen" Hauptschneide im äußeren Bereich des Bohrwerkzeugs und einer "scharfen" Hauptschneide im Zentrum des Bohrwerkzeugs. Erfindungsgemäß wird daher ein Bohrwerkzeug zur Verfügung gestellt, das durch einen "scharfen" zentralen Hauptschneidenabschnitt eine hohe Schnittgeschwindigkeit erlaubt und dennoch eine hohe mechanische Stabilität aufweist, da ein äußerer Abschnitt der Hauptschneide "stumpf" ausgebildet ist. Vorteilhafterweise kann ein derartiges Bohrwerkzeug durch wenige Schleifvorgänge, insbesondere zwei Schleifvorgänge, erhalten werden. Durch einen ersten Schleifvorgang kann die erste Freifläche 306, 307 mit einem kleinen Freiwinkel erhalten werden und durch einen zweiten Schleifvorgang kann die zweite Freifläche 304, 305 mit einem großen Freiwinkel hergestellt werden. Ein erfindungsgemäßes Bohrwerkzeug ist daher vorteilhafterweise in seiner Herstellung ungefähr so aufwändig wie ein Bohrwerkzeug des Stands der Technik, dessen erste Freifläche zwei zur Hauptschneide parallele Begrenzungen aufweist. Durch die erfindungsgemäße Ausführungsform des Bohrwerkzeugs können die Vorschubkräfte verringert werden, wodurch die mechanische Stabilität erhöht werden kann.

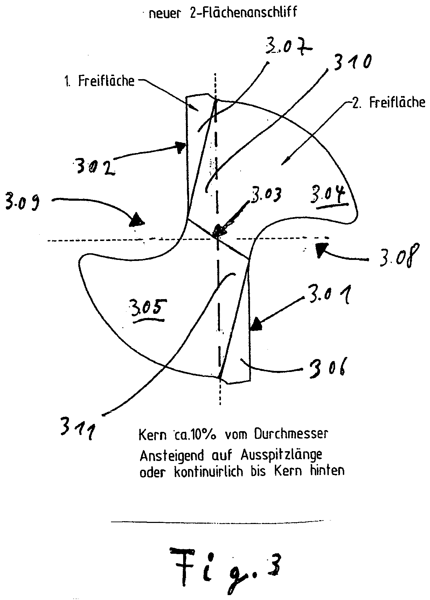

Fig. 3 zeigt die Ausführungsform nach Fig. 2 mit Hauptschneiden 301, 302 und einer Querschneide 303, wobei eine nach innen sich verjüngende erste Freifläche 306, 307 dargestellt ist, die an eine zweite Freifläche 304, 305 anschließt. Die zweite Freifläche 304, 305 ist im Vergleich zur Ausführungsform der Fig. 1 um eine Fläche 310, 311 vergrößert. Die Querschneide 303 wird daher ausschließlich von der jeweiligen zweiten Freifläche 304, 305 umgeben, die stärker abfallend ist als die erste Freifläche 306, 307, da sie einen größeren Freiwinkel als die erste Freifläche 306, 307 aufweist. Die Vergrößerung der zweiten Freifläche 304, 305 erhöht den Freiraum für Späne und/oder Kühl- und/oder Schmiermittel, was zu einer besseren Spanabfuhr führt, wodurch eine Verringerung der notwendigen Vorschubkraft (Axialkraft) erreicht wird.

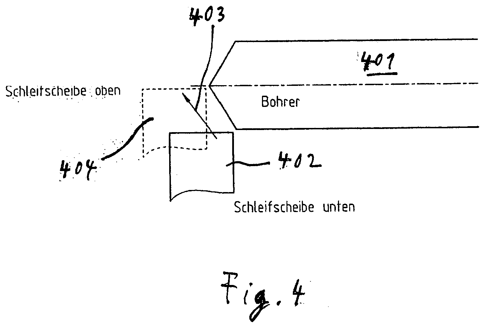

Fig. 4 zeigt das Anschleifen einer Bohrerspitze eines Bohrwerkzeugs 401 mit einer Schleifscheibe 402, 404, wobei die Schleifscheibe 402, 404 in Richtung des Pfeils 403 verfahren wird.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 101: Hauptschneide
- 102: Hauptschneide
- 103: Querschneide
- 104: zweite Freifläche
- 105: zweite Freifläche
- 106: erste Freifläche
- 107: erste Freifläche
- 108: Spannut
- 109: Spannut
- 201: Hauptschneide
- 202: Hauptschneide
- 203: Querschneide
- 204: zweite Freifläche
- 205: zweite Freifläche
- 206: erste Freifläche
- 207: erste Freifläche
- 208: Spannut
- 209: Spannut
- 301: Hauptschneide
- 302: Hauptschneide
- 303: Querschneide
- 304: zweite Freifläche
- 305: zweite Freifläche
- 306: erste Freifläche
- 307: erste Freifläche
- 308: Spannut
- 309: Spannut
- 310: zusätzliche Fläche der zweiten Freifläche
- 311: zusätzliche Fläche der zweiten Freifläche
- 401: Bohrwerkzeug
- 402: Schleifscheibe
- 403: Richtungspfeil
- 404: Schleifscheibe

## Patentansprüche

1. Bohrwerkzeug zur spanenden Bearbeitung, wobei das Bohrwerkzeug umfasst:
vier oder mehr Hauptschneiden (201, 202) und
vier oder mehr erste Freiflächen (206, 207) mit einem ersten Freiwinkel, wobei die ersten Freiflächen (206, 207) angrenzend an die Hauptschneiden (201, 202) ausgebildet sind,
wobei die ersten Freiflächen (206, 207) ausgehend vom Umfang des Bohrwerkzeugs zum Kern des Bohrwerkzeugs verjüngend ausgebildet sind, wobei die ersten Freiflächen (206, 207) keilförmig ausgebildet sind, wobei das Bohrwerkzeug umfasst: zweite Freiflächen (204, 205) mit einem zweiten Freiwinkel, wobei die zweiten Freiflächen (204, 205) angrenzend an die ersten Freiflächen (206, 207) ausgebildet sind, wobei sich durch die Ausbildung des Bohrwerkzeugs eine Ausspitzung ergibt, und wobei das Bohrwerkzeug jeweils dritte Freiflächen umfasst.

2. Bohrwerkzeug nach Anspruch 1, wobei der zweite Freiwinkel größer als der erste Freiwinkel ist.

3. Bohrwerkzeug nach einem der Ansprüche 1 oder 2, wobei das Bohrwerkzeug umfasst:
eine Querschneide (203), wobei die zweite Freifläche (204, 205) an die Querschneide (203) angrenzend ausgebildet ist und wobei die erste Freifläche (206, 207) nicht an die Querschneide (203) angrenzend ausgebildet ist.

4. Bohrwerkzeug nach einem der vorhergehenden Ansprüche, wobei das Bohrwerkzeug umfasst:
eine weitere Hauptschneide (201, 202) und
eine weitere erste Freifläche (206, 207), wobei die weitere erste Freifläche (206, 207) angrenzend an die weitere Hauptschneide (201, 202) ausgebildet ist, wobei die weitere erste Freifläche (206, 207) ausgehend vom Umfang des Bohrwerkzeugs zum Kern des Bohrwerkzeugs verjüngend ausgebildet ist.

5. Bohrwerkzeug nach einem der vorhergehenden Ansprüche, wobei das Bohrwerkzeug umfasst:
eine Querschneide, wobei die zweiten Freiflächen an die Querschneide angrenzend ausgebildet sind und wobei die ersten Freiflächen nicht an die Querschneide angrenzend ausgebildet sind.

## Claims

1. Drilling tool for machining, wherein the drill bit comprises: four or more cutting lips (201, 202) and
four or more first lands (206, 207) with a first clearance angle, wherein the first lands (206, 207) are formed adjacent to the main cutting lips (201, 202), wherein
the first lands (206, 207) are in tapered form from the circumference of the drill bit to the core of the drill bit, wherein the first lands (206, 207) are formed as a wedge-shape, wherein the drilling tool comprises: second lands (204, 205) with a second clearance angle, wherein the drill bit comprises second lands (204, 205) formed adjacent to the first lands (206, 207), wherein a point thinning results from the form of the drill bit, and wherein the drill bit comprises third lands in each case.

2. Drill bit according to claim 1, wherein the second clearance angle is greater than the first clearance angle.

3. Drill bit according to claim 1 or 2, wherein the drill bit comprises: a chisel edge (203), wherein the second land (204, 205) is formed adjacent to the chisel edge (203) and wherein the first land (206, 207) is not formed adjacent to the chisel edge (203).

4. Drill bit according to one of the preceding claims, wherein the drill bit comprises:
a further primary cutting lip (201, 202) and
a further first land (206, 207), wherein the further first land (206, 207) is formed adjacent to the further primary cutting lip (201, 202), wherein the further first land (206, 207) is formed as a taper from the circumference of the drill bit to the core of the drill bit.

5. Drill bit according to one of the previous claims, wherein the drill bit comprises:
a chisel edge, wherein the second lands are formed adjacent to the chisel edge and
wherein the first lands are not formed adjacent to the chisel edge.

## Revendications

1. Outil de forage pour l'usinage par enlèvement de copeaux, ledit outil de forage comprenant:
au moins quatre tranchants principaux (201, 202) et
au moins quatre premières surfaces de dépouille (206, 207) avec un premier angle de dépouille, les premières surfaces de dépouille (206, 207) étant prévues adjacentes aux tranchants principaux (201, 202), où
les premières surfaces de dépouille (206, 207) sont prévues de manière à s'amincir de la périphérie de l'outil de forage jusqu'à l'âme de l'outil de forage, les premières surfaces de dépouille (206, 207) étant réalisées en forme de coin, l'outil de forage comprenant : des deuxièmes surfaces de dépouille (204, 205) avec un deuxième angle de dépouille, les deuxièmes surfaces de dépouille (204, 205) étant prévues adjacentes aux premières surfaces de dépouille (206, 207), un apointissage résultant de la conformation de l'outil de forage, et l'outil de forage comprenant des troisièmes surfaces de dépouille respectives.

2. Outil de forage selon la revendication 1, où le deuxième angle de dépouille est supérieur au premier angle de dépouille.

3. Outil de forage selon la revendication 1 ou la revendication 2, ledit outil de forage comprenant:
un tranchant transversal (203), la deuxième surface de dépouille (204, 205) étant prévue adjacente au tranchant transversal (203) et la première surface de dépouille (206, 207) étant prévue non adjacente au tranchant transversal (203).

4. Outil de forage selon l'une des revendications précédentes, ledit outil de forage comprenant:
un autre tranchant principal (201, 202) et
une autre première surface de dépouille (206, 207), l'autre première surface de dépouille (206, 207) étant prévue adjacente à l'autre tranchant principal (201, 202), l'autre première surface de dépouille (206, 207) étant prévue de manière à s'amincir de la périphérie de l'outil de forage jusqu'à l'âme de l'outil de forage.

5. Outil de forage selon l'une des revendications précédentes, ledit outil de forage comprenant:
un tranchant transversal, les deuxièmes surfaces de dépouille étant prévues adjacentes au tranchant transversal et les premières surfaces de dépouille étant prévues non adjacentes au tranchant transversal.
